# FASCICULE DE BREVET EUROPEEN

(11) **EP 0 488 881 B1**
(45) Date de publication et mention de la délivrance du brevet: **15.03.1995**
(21) Numéro de dépôt: 91403196.8
(22) Date de dépôt: 26.11.1991
(51) Int. Cl.: H02J 7/24, H02J 7/16

(54) **Dispositif régulateur de la tension de charge d'une batterie par un alternateur**
Regelvorrichtung für die von einem Wechselstromgenerator abgegebene Batteriespannung
Apparatus for regulating the charge voltage of a battery, delivered by an alternator

(30) Priorité: 27.11.1990 FR 9014789
(43) Date de publication de la demande: 03.06.1992
(73) Titulaire: VALEO EQUIPEMENTS ELECTRIQUES MOTEUR, 94000 Créteil (FR); SGS-THOMSON MICROELECTRONICS s.r.l., 20041 Agrate Brianza (Milano) (IT)
(72) Inventeur: Pierret, Jean Marie, F-75012 Paris (FR); Canitrot, Didier, F-94510 La Queue en Brie (FR); Pennisi, Alessio, F-20149 Milano (FR); Marchio, Fabio, I-21013 Gallarate (IT)
(74) Mandataire: Ahner, Francis

(56) Documents cités:
- EP-A- 0 116 482
- EP-A- 0 330 561
- FR-A- 2 285 743
- US-A- 4 362 983
- US-A- 4 409 539
- US-A- 4 451 774

## Description

La présente invention concerne d'une façon générale un dispositif régulateur pour la charge d'une batterie par un alternateur délivrant une tension redressée comportant une composante d'ondulation.

On connaît déjà dans la technique, par le document FR-A-2 629 957, un dispositif régulateur qui comprend un circuit de régulation sur la valeur moyenne de la tension d'alternateur redressée comportant en succession un circuit d'obtention de valeur moyenne, un comparateur à seuil, un circuit de temporisation et un étage de puissance pour la commande du courant dans un enroulement d'excitation de l'alternateur.

Dans un tel circuit connu, le circuit d'obtention de valeur moyenne est constitué par un détecteur d'enveloppe basé sur les crêtes positives de la tension à réguler, en association avec un filtre RC dont le pied est relié à la sortie dudit détecteur. Un tel circuit a pour objet d'obtenir la valeur moyenne de la tension à réguler pratiquement sans induire de déphasage ou retard, en vue de ne pas favoriser un abaissement excessif de la fréquence à laquelle la régulation s'effectue. On rappellera ici qu'un tel abaissement de la fréquence est nuisible, en particulier parce qu'il rend perceptibles par le conducteur les variations de l'intensité lumineuse des faisceaux des projecteurs du véhicule.

Un tel circuit connu peut être par ailleurs facilement réalisé sous forme de composants électroniques discrets, nais pose des difficultés lorsqu'on souhaite le réaliser en technologie monolithique. Plus particulièrement, ce circuit impose au niveau du détecteur d'enveloppe une capacité coûteuse en surface de silicium. Il en résulte un produit de prix de revient et d'encombrement plus élevés.

La présente invention vise à pallier cet inconvénient de la technique antérieure et à proposer un dispositif qui puisse être facilement intégré sur une puce de silicium.

Accessoirement, un objet de l'invention est de proposer un dispositif régulateur qui accroisse de façon sûre et significative la fréquence à laquelle s'effectue la régulation dans des domaines de fonctionnement limites.

Ainsi l'invention concerne un dispositif régulateur pour la charge d'une batterie par un alternateur délivrant une tension redressée comportant une composante d'ondulation, du type comprenant un circuit de régulation sur la valeur moyenne de la tension d'alternateur redressée comportant en succession un circuit d'obtention de valeur moyenne, un comparateur à seuil, un circuit de temporisation et un étage de puissance pour la commande du courant dans un enroulement d'excitation de l'alternateur, caractérisé en ce qu'il comprend un circuit de contre-réaction entre l'aval du circuit de temporisation et l'entrée du circuit d'obtention de valeur moyenne, propre à décaler vers le bas ladite valeur moyenne obtenue en sortie du circuit d'obtention de valeur moyenne pendant les phases de décroissance du courant d'excitation.

De cette manière, par exemple lors d'un fonctionnement dans des conditions proches de la pleine charge, c'est-à-dire pour une croissance très lente de la tension à réguler lorsque le courant d'excitation est appliqué, dès que l'étage de puissance est ouvert une fois que la valeur moyenne de ladite tension a fait basculer le temporisateur, ladite valeur moyenne est décalée vers le bas à l'entrée du filtre, pour faire basculer le temporisateur dans l'autre sens de façon très rapide. Les impulsions de suppression du courant d'excitation sont donc sensiblement raccourcies, si bien que la fréquence de régulation est accrue.

De façon préférée, le circuit d'obtention de valeur moyenne est constitué par un filtre passe-bas.

Dans un mode de réalisation avantageux, lorsque le circuit de temporisation délivre un front de tension descendant pour faire diminuer le courant d'excitation, le circuit de contre-réaction est un circuit résistif.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels:
la figure 1 est un schéma-bloc d'un dispositif de la présente invention,
la figure 2 est un schéma de circuit détaillé du dispositif de la figure 1,
la figure 3 est un chronogramme illustrant le fonctionnement du circuit de la figure 2 dans un premier mode,
la figure 4a est un chronogramme illustrant ce que serait le fonctionnement du circuit dans un second mode si une partie déterminée de celui-ci était omise,
la figure 4b illustre le fonctionnement réel du circuit complet dans ce second mode,
la figure 5 est un diagramme illustrant l'évolution de la valeur moyenne de la tension régulée en fonction de la charge de l'alternateur,
la figure 6 illustre une variante d'un dispositif de la présente invention, et
la figure 7 illustre une autre variante du dispositif.

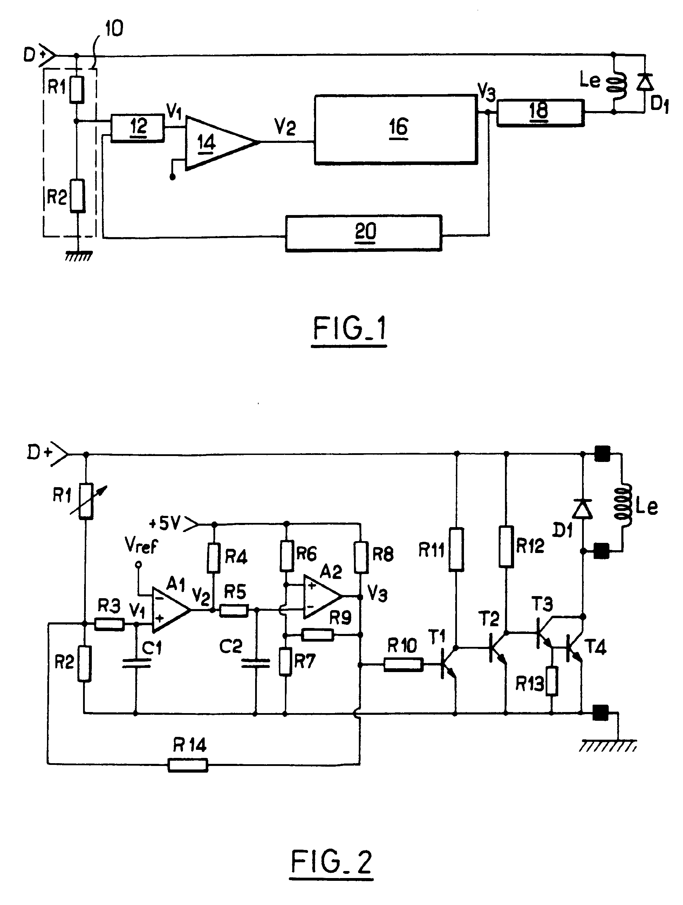

En référence tout d'abord à la figure 1, un dispositif régulateur selon l'invention comprend une borne d'entrée pour une tension redressée d'alternateur à réguler. Dans le cas d'espèce, il s'agit de la tension D+ prise sur le groupe de trois diodes de redressement prévues classiquement en aval d'un alternateur triphasé. Mais il est bien entendu que l'invention s'applique également à une régulation sur la base de la tension de batterie B+.

Entre la borne d'entrée et la masse et prévu un pont diviseur basé sur deux résistances en série R1 et R2. En vue de calibrer le dispositif, R1 peut être une résistance ajustable.

Le point milieu du pont diviseur est appliqué à l'entrée d'un filtre passe-bas 12, dont le but est d'atténuer la composante d'ondulation de la tension, issue de la division de la tension D+, appliquée à son entrée, sans toutefois induire un retard ou déphasage excessif dans l'évolution de la valeur moyenne du signal, comme on le verra en détail plus loin.

La sortie du filtre 12 est appliquée à une première entrée d'un comparateur 14, dont l'autre entrée reçoit une référence de tension Vref.

La sortie du comparateur 14 est appliquée à l'entrée d'un circuit de temporisation 16 destiné à éviter que le circuit n'accroche sur la fréquence de la composante d'ondulation du signal d'entrée. Comme on le verra plus loin, la temporisation a ici pour point de départ l'instant où les crêtes négatives du signal franchissent le seuil défini par Vref.

La sortie du temporisateur 16 attaque l'entrée d'un étage de puissance 18, de conception classique en soi, dont la sortie est reliée à une première borne de l'enroulement d'excitation Le de l'alternateur, auquel peut être associée classiquement une diode de roue libre D1. L'autre borne de Le reçoit la tension D+.

Selon un aspect essentiel de la présente invention, la sortie du circuit de temporisation 16 est également appliquée, par l'intermédiaire d'un circuit de contre-réaction 20, à l'entrée du filtre 12.

En négligeant pour le moment le circuit de contre-réaction 20, un tel régulateur fonctionne de la manière suivante : la fraction V0 de la tension D+ appliquée à l'entrée du filtre 12 est débarrassée par ce filtre de l'essentiel de sa composante d'ondulation. La tension V1 à la sortie du filtre consiste ainsi dans la superposition de la valeur moyenne de la tension d'entrée du filtre, évoluant comme la valeur moyenne de D+, et d'une faible composante d'ondulation résiduelle.

Lorsque V1 franchit le seuil de tension Vref dans le sens ascendant, alors le comparateur 14 délivre un niveau de tension haut qui est appliqué au temporisateur 16. Ce dernier est conçu pour qu'après une durée déterminée, typiquement de 2 millisecondes, sa sortie passe d'un niveau de tension haut à un niveau de tension bas. Ce front descendant, appliqué à l'entrée de l'étage de puissance 18, a pour effet de couper la liaison entre l'inductance Le et la masse. En conséquence, le courant d'excitation dans Le diminue, ce qui a pour effet, après un retard prédéterminé égal au cumul des retards engendrés dans l'alternateur même et dans le filtre 12, de faire baisser la valeur moyenne de D+.

V1 franchit alors le seuil Vref dans le sens descendant, ce qui a pour effet, de ramener à zéro la tension à l'entrée du temporisateur 16 et subséquemment de rétablir la sortie de ce dernier au niveau haut pour ainsi rétablir l'alimentation en courant de Le, le courant d'excitation reprenant alors sa croissance.

Une telle régulation donne toute satisfaction dans des situations de charge moyenne de l'alternateur; on observe une régulation dans des limites étroites, à une fréquence qui est par exemple de quelques dizaines de Hertz, de la tension D+ sur une valeur très proche de la tension de charge de la batterie, par exemple 14,5 volts.

Pour plus de détails, on se reportera à la demande de brevet FR-A-2 629 957.

Par ailleurs, il est bien connu dans un régulateur du type décrit (en négligeant toujours la contre-réaction 20) que, lorsque l'on arrive dans des domaines de fonctionnement sous charge élevée, la fréquence de régulation peut diminuer considérablement, jusqu'à rendre perceptibles par le conducteur du véhicule les dérives de la tension D+ notamment au niveau des intensité d'éclairement des projecteurs du véhicule.

Le circuit de contre-réaction prévu conformément à la présente invention a pour objet d'accroître de façon significative la fréquence de régulation sous charge élevée, pour ainsi éviter cet inconvénient. Plus précisément, et comme on le verra en détail plus loin, ce circuit de contre-réaction 20, en association avec les autres composants, a pour objet d'induire dans la tension V0 à l'entrée du filtre 12 des décalages qui vont avoir pour effet de diminuer sensiblement la durée des périodes de décroissance du courant d'excitation. De la sorte, l'amplitude de la baisse de la valeur moyenne de D+ à chacune de ces périodes est réduite, de telle sorte que la valeur de seuil Vref est subséquemment plus rapidement atteinte et que la fréquence est accrue.

On va maintenant décrire dans le détail en référence à la figure 2 une forme de réalisation concrète d'un circuit de régulation conforme à l'invention.

Le pont diviseur R1, R2 a déjà été décrit plus haut. Le point commun entre R1 et R2 est relié à une première borne d'une résistance R3. La seconde borne de R3 est reliée à l'entrée non-inverseuse d'un amplificateur différentiel A1, cette entrée étant reliée à la masse via un condensateur C1. Les composants R3, C1 définissent le filtre passe-bas 12, les valeurs de ces deux composants étant choisies de manière à atténuer dans une mesure donnée la composante d'ondulation, tout en induisant dans la valeur moyenne du signal un retard assez faible pour être compatible avec la régulation à effectuer.

L'entrée inverseuse de A1 reçoit une tension de référence Vref, qui peut être obtenue par exemple à partir de la tension D+ à l'aide d'une diode zéner appropriée ( non représentée ).

Une résistance R4 est montée entre la sortie de A1 et une source de tension stabilisée, par exemple de +5 volts. Cette tension stabilisée peut également être dérivée de la tension D+, par exemple à l'aide d'un montage classique combinant une diode zéner (non représentée) et un transistor bipolaire.

La sortie de A1 attaque l'entrée inverseuse d'un second amplificateur différentiel A2 par l'intermédiaire d'une résistance R5. Cette entrée inverseuse est reliée à la masse par l'intermédiaire d'un condensateur C2. Un pont diviseur constitué par les résistances R6 et R7 montées en série entre la ligne +5 volts et la masse permet d'appliquer à l'entrée non-inverseuse de A2 une tension déterminée. Une résistance R8 relie la sortie de A2 à la ligne +5v, tandis qu'une résistance de réaction R9 relie ladite sortie de A2 à son entrée non-inverseuse.

La sortie de A2 attaque en outre par l'intermédiaire d'une résistance R10 un étage de puissance. Cet étage comprend deux transistors NPN T1 et T2 comportant chacun une résistance de collecteur, respectivement R11 et R12, et un étage darlington T3, T4, R13 dont le collecteur attaque l'inductance d'excitation Le, à laquelle est associée la diode de roue libre D1.

Enfin, selon un aspect essentiel de l'invention, la sortie de A2 est reliée au point milieu du pont diviseur R1, R2 par l'intermédiaire d'une résistance R14.

V0 désigne la tension à l'entrée du filtre, V1 la tension à l'entrée non-inverseuse de A1, V2 la tension de sortie de A1 et V3 la tension de sortie de A2.

L'étage construit autour de A2, ainsi que l'étage de puissance, sont sensiblement identiques à ceux décrits dans la demande de brevet sus-mentionnée. En particulier, le circuit de temporisation fait appel au condensateur C2 en combinaison avec le montage de A2 en comparateur à double seuil; il induit les temporisations nécessaires par le jeu de l'évolution lente de la tension aux bornes de C2.

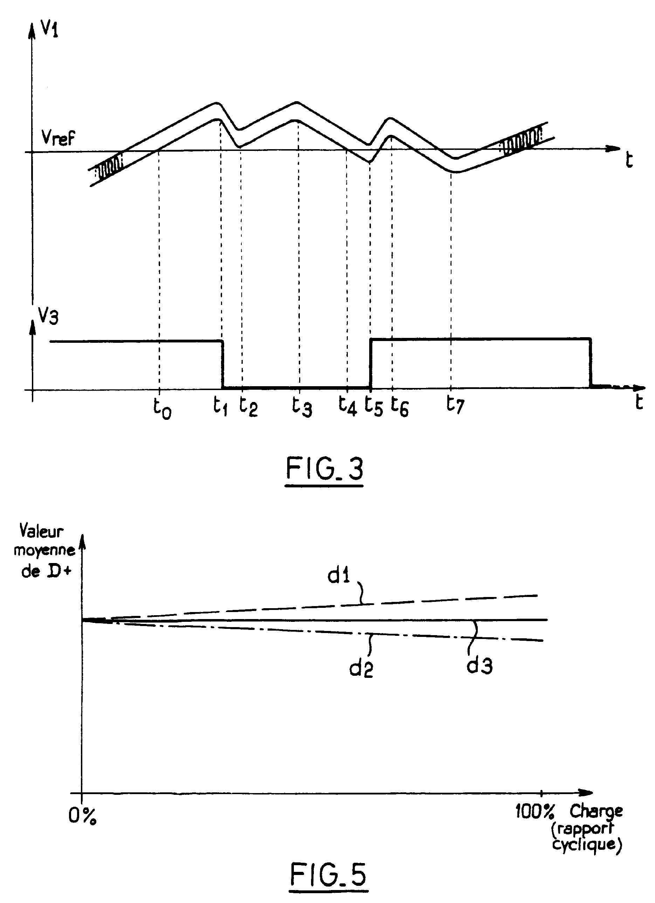

Le fonctionnement du circuit de la figure 2 va maintenant être expliqué en détail en référence à la figure 3.

Tout d'abord, on comprend que le circuit de contre-réaction constitué par la résistance R14 se comporte de la façon suivante: lorsque la sortie de A2 passe de 0 à +5V, ceci a pour effet de superposer à la tension D+ divisée à l'entrée du filtre une composante continue dont la valeur est determinée par les valeurs des résistances R14, R1 et R2. En conséquence, la tension à l'entrée V0 du filtre subit un décalage vers le haut de cette amplitude, et la tension V1 en sortie de filtre subit ce même décalage avec un léger retard. Inversement, lorsque la tension de sortie de A2 passe de +5V à zéro, un décalage de sens inverse de la tension V1 se produit.

On peut observer que le comparateur A1 et le circuit de temporisation qui le suit opèrent de manière à ce que la temporisation démarre au moment ou les tensions de crêtes négatives du signal V1 commencent à franchir, dans un sens ou dans l'autre, le seuil Vref.

Plus précisément, supposons initialement que la tension V1 est en permanence au-dessous de Vref, et que sa valeur moyenne croit. La tension V3 est alors de l'ordre de +5v, et une fraction de cette tension est appliquée à l'entrée du filtre, ce qui décale légèrement vers le haut la valeur moyenne de V1 par rapport à celle qui serait obtenue en ne considérant que la tension D+.

Lorsque les premières crêtes positives commencent à franchir Vref, alors V2 consiste en une succession de niveaux de tension hauts et bas. Elle est cependant inapte à charger C2 à une valeur telle que la tension à ses bornes franchisse le seuil courant du comparateur A2. La sortie de celui-ci reste donc à un niveau de tension haut.

Lorsque maintenant les tensions des crêtes négatives de V1 franchissent Vref, alors V2 est en permanence un niveau de tension haut, ce qui va provoquer la charge de C2 à une vitesse déterminée par les valeurs de R4 et de R5, jusqu'à ce que la tension aux bornes de C2 franchisse le seuil courant du comparateur A2. V3 bascule donc, après un retard déterminé par rapport au franchissement de Vref par les crêtes négatives de V1, du niveau haut au niveau bas. Ce retard peut être d'environ 2 millisecondes, comme décrit plus haut.

La valeur de seuil du comparateur A2 est alors changée; mais surtout, la tension V0 à l'entrée du filtre est décalée vers le bas, puisque la fraction de la tension de +5V qui était superposée à la fraction de D+ disparaît. V1 subit ce même décalage après un faible délai égal à la constante de temps du filtre. Ce décalage, comme on va le voir plus loin, a des effets différents selon la pente de croissance de la valeur moyenne de V1. En outre, l'étage de puissance est commandé de manière à ouvrir T3, T4, ce qui induit une diminution du courant d'excitation de l'alternateur.

Après un instant déterminé dû au retard propre de l'alternateur et de la constante de temps du filtre, V1 diminue. Lorsque ses crêtes négatives commencent à franchir Vref, alors la tension V2 bascule du niveau haut au niveau bas; C2 se décharge à travers le comparateur A1 et la résistance R5, le seuil courant de A2 est franchi dans le sens descendant et V3 bascule à nouveau au niveau haut. Il en résulte un nouveau décalage vers le haut de la tension V0, puis de la tension V1, le changement de seuil du comparateur A2 et la fermeture de la paire Darlington T3, T4 pour faire croître à nouveau le courant d'excitation.

Plus précisément, et maintenant en référence à la figure 3, lorsqu'à un instant t0, les crêtes négatives du signal filtré V1 franchissent le seuil Vref, le circuit de temporisation entre en jeu pour faire basculer, par exemple 2 millisecondes plus tard (instant t1), la sortie de A2 du niveau haut au niveau bas. Il en résulte un décalage vers le bas de la valeur moyenne de V1 (entre t1 et t2), mais l'amplitude de ce décalage est insuffisante pour faire repasser les crêtes négatives au-dessous de Vref. En conséquence, le condensateur C2 reste chargé et V3 reste au niveau bas. La paire Darlington T3, T4 est ouverte, ce qui induit une diminution du courant d'excitation.

Cette diminution induit, avec un retard prédéterminé causé par l'alternateur lui-même et le filtre R3-C1, une diminution de la valeur moyenne de V1 (entre t3 et t4). Lorsque les premières crêtes négatives commencent à franchir dans le sens descendant le seuil Vref (instant t4), alors C2 se décharge à travers le comparateur A1 et la résistance R5. Le seuil courant de A2 est franchi (instant t5). V3 repasse alors du niveau bas au niveau haut, ce qui d'une part fait croître à nouveau le courant d'excitation par l'intermédiaire du circuit de puissance, d'autre part accroit le seuil de A2 et enfin decale à nouveau vers le haut la valeur moyenne de V0 puis celle de V1 (croissance de V1 entre t5 et t6). On peut noter ici que, suite à cette croissance de V1, cette tension repasse intégralement au-dessus de Vref, mais cependant pendant une durée insuffisante pour provoquer une charge de C2 assez forte pour faire basculer de nouveau A2. V3 reste donc au niveau haut. Entre t6 et t7, la décroissance de V1 se poursuit, toujours provoquée par le retard propre à l'alternateur et au filtre R3-C1. A l'instant t7, la nouvelle croissance de Ie a induit une nouvelle croissance de V1, et un nouveau cycle commence.

On comprend que la contre-réaction a pour effet d'accroître la fréquence de régulation, en avançant le moment où les crêtes négatives de V1 vont franchir Vref, cette fréquence étant par ailleurs limitée vers le haut par les retards induits par le circuit de temporisation.

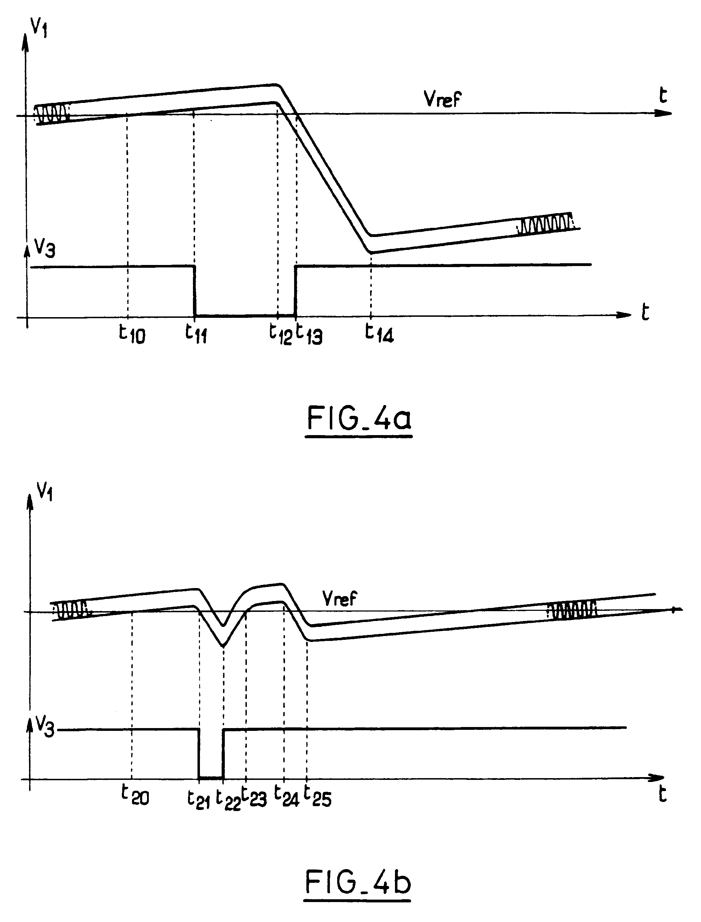

On va maintenant décrire, en référence aux figures 4a et 4b, le comportement du circuit de la présente invention dans un domaine de fonctionnement proche du plein champ, c'est-à-dire pour une consommation de courant élevée par les divers organes du véhicule.

La figure 4a illustre, dans un but d'explication, le cas où la contre-réaction entre la sortie de A2 et le filtre est omise. La figure 4b illustre quant à elle le cas où cette contre-réaction est prévue conformément à la présente invention.

On peut rappeler tout d'abord que le fonctionnement proche du régime de plein champ est caractérisé par une montée très lente de la valeur moyenne de D+, et donc de V1, pendant les phases d'accroissement du courant d'excitation, et par une descente rapide de cette valeur moyenne lorsque l'inductance d'excitation cesse d'être alimentée en courant.

Ainsi la régulation tend à se faire avec un fort rapport cyclique mais selon des périodes extrêmement longues, ce que l'on souhaite éviter comme évoqué plus haut.

En référence tout d'abord à la figure 4a, on va décrire ce qui se passerait si la contre-réaction par R14 était omise. En t10, les crêtes négatives de V1 franchiraient Vref. Après la temporisation, V3 basculerait au niveau bas (instant t11). A cause du retard propre à l'alternateur et au filtre, la valeur moyenne de V1 ne diminuerait qu'à t12, séparé de t11 par exemple de quelques millisecondes. Peu après t12, les crêtes négatives de V1 franchiraient Vref et, un instant plus tard (en t13), la sortie V3 basculerait à nouveau au niveau haut, pour amener la valeur moyenne de V1 à croître de nouveau en t14, compte-tenu du retard propre à l'alternateur et au filtre R3-C1. Ainsi l'on obtiendrait une durée d'impulsion négative de désexcitation au niveau de V3 relativement longue (durée t13-t11). Ceci induirait une baisse importante de V1 suite à cette phase, d'où une durée beaucoup plus longue pour que les crêtes négatives n'atteignent à nouveau Vref à partir de t14, d'où enfin une fréquence de régulation extrêmement basse.

Le fonctionnement du circuit de l'invention dans les mêmes conditions va maintenant être décrit en référence à la figure 4b.

t20 désigne le franchissement de Vref par les tensions de crêtes négatives. t21 est l'instant auquel V3 bascule au niveau bas. Etant donné qu'à cet instant V1 ne s'est que très peu élevée au-dessus de Vref, la chûte de V1 due à la contre-réaction a pour effet que celle-ci franchit à nouveau Vref; C2 se décharge donc, et fait basculer à nouveau le comparateur A2 après un temps très court (instant t22). On observe donc que l'impulsion de désexcitation (entre t21 et t22) est beaucoup plus courte que dans le cas de la figure 4a. La fréquence de régulation va donc être accrue très sensiblement par la contre-réaction R14 dans ce type de situation.

Le basculement de V3 à l'instant t22 induit bien entendu une remontée de la valeur moyenne de V1 (entre t22 et t23), cette tension restant intégralement au-dessus du seuil Vref entre t23 et l'instant t24 auquel V1 chûte à nouveau, ceci étant l'effet retardé du passage initial de V3 au niveau bas (instant t21). Il est à noter ici que, sensiblement entre t23 et t24, V1 ne reste pas suffisamment longtemps au-dessus de Vref pour provoquer un nouveau basculement de V3 du niveau haut au niveau bas (du fait de la temporisation existant entre le franchissement de Vref par les crêtes négatives et le basculement effectif).

Entre les instants t24 et t25, soit une durée à peu près égale à la durée qui sépare t22 de t21, V1 chûte et franchit Vref. Ensuite, V1 croit de nouveau lentement et un nouveau cycle commence.

On observe que, du fait que la période t22-t21 est beaucoup plus courte que la période correspondante t13-t11 sur la figure 4a, la chûte de V1 entre t24 et t25 est d'amplitude beaucoup plus faible que dans le cas de cette figure 4a. V1 reviendra donc au niveau de Vref beaucoup plus rapidement, et la fréquence à laquelle la régulation s'effectue est sensiblement accrue. On note en outre que V1, et par conséquent D+, oscille dans des limites beaucoup plus étroites que dans le cas de la figure 4a. La tension de charge de batterie va donc suivre avec une précision bien meilleure la tension nominale de charge (par exemple 14,5 volts) fixée par Vref.

En pratique, par un choix approprié des composants, à la portée de l'homme de l'art, on peut sans difficulté obtenir une fréquence de régulation, dans des conditions proches du plein champ, supérieure à 20 Hz; à une telle fréquence, les effets visuels des fluctuations de D+ sont imperceptibles par l'oeil humain.

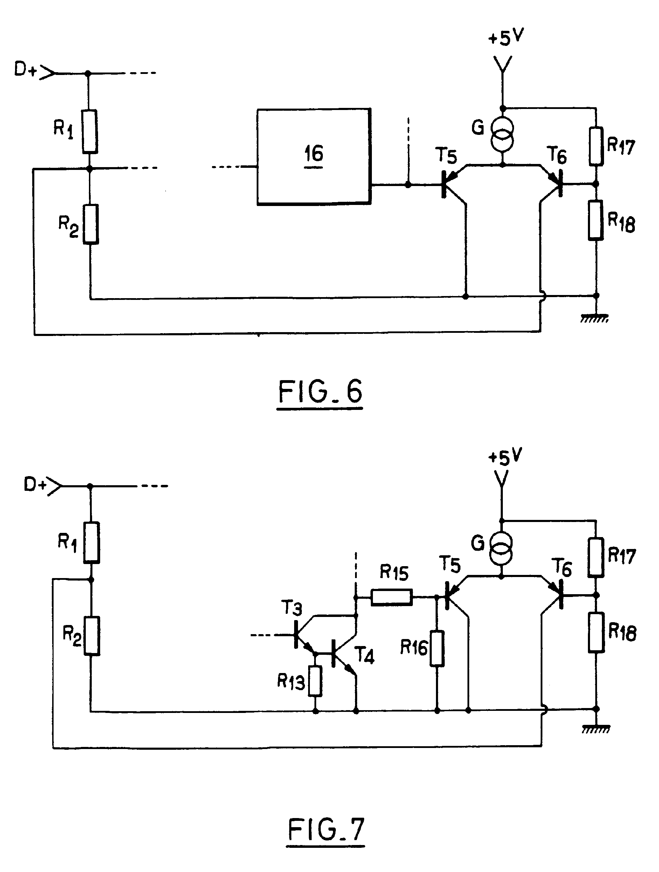

On va maintenant décrire en référence à la figure 5 un effet particulièrement avantageux obtenu avec le circuit de la présente invention.

Il est à noter tout d'abord que, de façon bien connue, l'amplitude de la composante d'ondulation de la tension D+ croit avec la charge de l'alternateur. L'amplitude de la composante d'ondulation résiduelle dans la tension V1 croit de la même manière.

Etant donné que, dans le circuit préféré de l'invention, les phases d'excitation/désexcitation de l'alternateur sont déterminées en confrontant la tension de référence Vref avec les valeurs de tensions des crêtes négatives de V1, il existe un décalage entre la valeur de Vref et la valeur moyenne de V1, et donc entre la valeur de consigne pour D+ et sa valeur moyenne effective. Et ce décalage, proportionnel à l'amplitude de la composante d'ondulation, croit donc avec la charge. Ainsi l'on a représenté sur la figure 5, en tiretés, la façon dont évoluerait la valeur moyenne de la tension D+ régulée en fonction de la charge de l'alternateur. Il s'agit en première approximation d'une droite d1 de pente positive.

Maintenant, la contre-réaction prévue selon la présente invention a un certain effet sur la valeur moyenne de V1, dans la mesure où, à chaque fois que A2 délivre un niveau de tension haut, on superpose à la fraction de D+ prise par le pont diviseur R1, R2 une composante continue supplémentaire. Ainsi, la régulation s'effectue sur une tension qui s'écarte de la tension D+ de façon croissante avec le rapport entre les périodes d'excitation (V3 = 5V) et de désexcitation (V3 = 0V). En conséquence, le seuil Vref étant quant à lui constant, on comprend que la valeur moyenne de la tension régulée D+ effective va diminuer avec la charge, ce qui donne en première approximation, comme illustré en traits mixtes, une droite d2 de pente négative.

Des essais concrets ont démontré que les deux effets ci-dessus se compensaient bien (c'est-à-dire que les pentes de d1 et d2 avaient, en valeur absolue, des valeurs semblables), si bien que la valeur moyenne de la tension régulée reste pratiquement constante quelle que soit la charge (droite en traits pleins d3).

Ainsi, une régulation basée sur les crêtes négatives de la composante d'ondulation de la tension filtrée, en combinaison avec la contre-réaction, donne une tension régulée dont la valeur moyenne varie peu en fonction de la charge, ce qui constitue un progrès additionnel par rapport à la technique antérieure.

On va maintenant décrire en référence aux figures 6 et 7 deux variantes de réalisation de l'invention.

Dans ces variantes, la résistance de contre-réaction R14 est remplacée par une source de courant, plus facile à mettre en oeuvre lorsqu'on réalise le dispositif de l'invention sous forme d'un circuit intégré.

Sur les figures 6 et 7, des éléments ou parties identiques ou similaires à ceux des figures précédentes sont désignés par les mêmes numéros de référence et ne seront pas décrits à nouveau.

Sur la figure 6, la sortie du circuit de temporisation 16 est reliée non seulement au circuit de puissance (non représenté) mais également à la base d'un transistor PNP T5, dont le collecteur est relié à la masse. L'émetteur de T5 est relié d'une part à une source de courant G elle-même connectée à la ligne de +5V, et d'autre part à l'émetteur d'un transistor PNP T6. A la base de T6 est appliquée, via un pont diviseur R17, R18 monté entre le +5V et la masse, une tension de polarisation. Le collecteur de T6 est connecté au point commun entre R1 et R2.

Les transistors T5 et T6 tiennent lieu de commutateurs pour sélectivement appliquer ou non à ce point commun le courant produit par G, selon l'état de sortie du temporisateur 16. On obtient ainsi une contre-réaction équivalente à celle obtenue par la résistance R14 sur la figure 2.

La variante de la figure 7 se distingue de celle de la figure 6 essentiellement par le fait que la base de T5 est commandée non pas par la sortie du temporisateur 16, mais par la sortie (collecteur) du transistor de puissance T4 qui contrôle le courant dans l'enroulement d'excitation de l'alternateur. La tension au collecteur de T4 est appliquée à la base de T5 via un pont diviseur R15, R16 monté entre ledit collecteur et la masse. Le fonctionnement est équivalent à celui du circuit de la figure 6.

Bien entendu, la présente invention n'est nullement limitée à la forme de réalisation décrite ci-dessus, mais l'homme de l'art saura y apporter toute variante ou modification dans les limites des revendications annexées. En particulier, le circuit de temporisation décrit plus haut peut être remplacé par tout circuit équivalent, et notamment par un circuit numérique de comptage, comprenant de façon tout à fait classique en soi des compteurs associés à une horloge de cadence appropriée.

De même, le filtre passif formé sur la figure 2 par R3 et C1 peut être remplacé par un filtre actif.

## Revendications

1. Dispositif régulateur pour la charge d'une batterie par un alternateur délivrant une tension redressée comportant une composante d'ondulation, du type comprenant un circuit de régulation sur la valeur moyenne de la tension d'alternateur redressée comportant en succession un circuit d'obtention de valeur moyenne (12; R3, C1), un comparateur à seuil (14; A1), un circuit de temporisation (16; C2, A2) et un étage de puissance (18; T1-T4) pour la commande du courant dans un enroulement d'excitation (Le) de l'alternateur, caractérisé en ce qu'il comprend un circuit de contre-réaction (20; R14; G, T5, T6) entre l'aval du circuit de temporisation et l'entrée du circuit d'obtention de valeur moyenne, propre à décaler vers le bas ladite valeur moyenne (V₁) obtenue en sortie du circuit d'obtention de valeur moyenne (12; R3, C1) pendant les phases de décroissance du courant d'excitation.

2. Dispositif selon la revendication 1, caractérisé en ce que le circuit d'obtention de valeur moyenne (12) produit en sortie une tension comportant une composante d'ondulation résiduelle de faible amplitude et en ce que le circuit de temporisation (16) est déclenché par le franchissement du seuil du comparateur (14) par les crêtes négatives de ladite composante d'ondulation résiduelle.

3. Dispositif selon la revendication 1 ou 2, caractérisé en ce qu'il est prévu en amont du circuit d'obtention de valeur moyenne un diviseur de tension (10; R1, R2).

4. Dispositif selon l'une des revendications 1 à 3, caractérisé en ce que le circuit d'obtention de valeur moyenne est constitué par un filtre passe-bas (12; R3, C1).

5. Dispositif selon l'une des revendications 1 à 4, caractérisé en ce que le circuit de temporisation (16) comprend un comparateur à double seuil (A2) en amont duquel est prévu un condensateur (C2) dont la charge et la décharge sont commandés en fonction de l'état de sortie du comparateur (14; A1).

6. Dispositif selon l'une des revendications 1 à 4, caractérisé en ce que le circuit de temporisation (16) comprend un circuit de comptage numérique.

7. Dispositif selon l'une des revendications 1 à 5, caractérisé en ce que le circuit de temporisation (16; C2, A2) délivre un front de tension descendant pour faire diminuer le courant d'excitation et en ce que le circuit de contre-réaction (20) est un circuit résistif (R14).

8. Dispositif selon l'une des revendications 1 à 6, caractérisé en ce que le circuit de contre-réaction (20) comprend une source de courant (G) et des moyens de commutation (T5, T6) pour appliquer sélectivement le courant de la source à l'entrée du circuit d'obtention de valeur moyenne en fonction de l'état de sortie du circuit de temporisation (16).

9. Dispositif selon la revendication 8, caractérisé en ce que le circuit de contre-réaction est relié directement à la sortie du circuit de temporisation (16).

10. Dispositif selon la revendication 8, caractérisé en ce que le circuit de contre-réaction est relié à la sortie de l'étage de puissance (18, T4).

## Patentansprüche

1. Regelvorrichtung für die Ladung einer Batterie durch einen Wechselstromgenerator, der eine gleichgerichtete Spannung mit einer Wellenkomponente abgibt, in der Ausführung mit einer Regelschaltung nach dem Mittelwert der gleichgerichteten Generatorspannung, die hintereinander eine Mittelwertschaltung (12; R3, C1), einen Schwellenwertvergleicher (14; A1), eine Verzögerungsschaltung (16; C2, A2) und eine Leistungsstufe (18; T1-T4) zur Steuerung des Stroms in der Erregerwicklung (Le) des Wechselstromgenerators umfaßt, **dadurch gekennzeichnet**, daß sie eine Gegenkopplungsschaltung (20; R14; G, T5, T6) zwischen dem Bereich hinter der Verzögerungsschaltung und dem Eingang der Mittelwertschaltung enthält, um den genannten Mittelwert, der sich am Ausgang der Mittelwertschaltung (12; R3, C1) ergibt, während der Phasen der Abnahme des Erregerstroms nach unten zu verschieben.

2. Vorrichtung nach Anspruch 1 , **dadurch gekennzeichnet**, daß die Mittelwertschaltung (12) ausgangsseitig eine Spannung erzeugt, die eine Restwellenkomponente mit geringer Amplitude enthält, und daß sich die Verzögerungsschaltung (16) beim Überschreiten des Schwellenwerts der Vergleichseinrichtung (14) durch die negativen Spitzen der genannten Restwellenkomponente einschaltet.

3. Vorrichtung nach Anspruch 1 oder 2 , **dadurch gekennzeichnet**, daß vor der Mittelwertschaltung ein Spannungsteiler (10; R1, R2) vorgesehen ist.

4. Vorrichtung nach einem der Ansprüche 1 bis 3, **dadurch gekennzeichnet,** daß die Mittelwertschaltung aus einem Tiefpaßfilter (12; R3, C1) besteht.

5. Vorrichtung nach einem der Ansprüche 1 bis 4, **dadurch gekennzeichnet**, daß die Verzögerungsschaltung (16) einen Doppelschwellenwert-Vergleicher (A) enthält, vor dem ein Kondensator (C2) vorgesehen ist, dessen Ladung und Entladung in Abhängigkeit vom Ausgangszustand der Vergleichseinrichtung (14; A1) gesteuert werden.

6. Vorrichtung nach einem der Ansprüche 1 bis 4, **dadurch gekennzeichnet**, daß die Verzögerungsschaltung (16) eine digitale Zählschaltung umfaßt.

7. Vorrichtung nach einem der Ansprüche 1 bis 5, **dadurch gekennzeichnet,** daß die Verzögerungsschaltung (16; C2, A2) eine absteigende Spannungsfront abgibt, um den Erregerstrom zu verringern, und daß die Gegenkopplungsschaltung (20) eine Widerstandsschaltung (R14) ist.

8. Vorrichtung nach einem der Ansprüche 1 bis 6, **dadurch gekennzeichnet**, daß die Gegenkopplungsschaltung (20) eine Stromquelle (G) und Schaltmittel (T5, T6) umfaßt, um wahlweise den Strom der Quelle an den Eingang der Mittelwertschaltung in Abhängigkeit vom Ausgangszustand der Verzögerungsschaltung (16) anzulegen.

9. Vorrichtung nach Anspruch 8 , **dadurch gekennzeichnet** daß die Gegenkopplungsschaltung direkt mit dem Ausgang der Verzögerungsschaltung (16) verbunden ist.

10. Vorrichtung nach Anspruch 8 , **dadurch gekennzeichnet**, daß die Gegenkopplungsschaltung mit dem Ausgang der Leistungsstufe (18, T4) verbunden ist.

## Claims

1. A regulator device for charging a battery from an alternator that delivers a rectified voltage including a ripple component, the device being of the type including a regulator circuit acting on the mean value of the rectified alternator voltage and comprising, in succession, a circuit for obtaining the main value (12; R3, C1), a threshold comparator (14; A1), a time delay circuit (16; C2, A2), and a power stage (18; T1-T4) for controlling the current flowing through the excitation winding (Le) of the alternator, the device being characterized in that it includes a negative feedback circuit (20; R14; G, T5, T6) between a point downstream from the time delay circuit and the input to the circuit for obtaining the mean value, and suitable for shifting downwards said mean value (V1) as obtained at the output from the circuit for obtaining the mean value (12; R3, C1) during periods when the excitation current is decreasing.

2. A device according to claim 1, characterized in that the circuit for obtaining the mean value (12) produces an output voltage including a low amplitude residual ripple component, and in that the time delay circuit (16) is triggered by the negative peaks of said residual ripple component crossing the threshold of the comparator (14).

3. A device according to claim 1 or 2, characterized in that a voltage divider (10; R1, R2) is provided upstream from the circuit for obtaining the mean value.

4. A device according to any one of claims 1 to 3, characterized in that the circuit for obtaining the mean value is constituted by a low pass filter (12; R3, C1).

5. A device according to any one of claims 1 to 4, characterized in that the time delay circuit (16) comprises a two-threshold comparator (A2) having a capacitor (C2) disposed upstream thereof with charging and discharging of the capacitor being controlled as a function of the output state of the comparator (14, A1).

6. A device according to any one of claims 1 to 4, characterized in that the time delay circuit (16) comprises a digital counter circuit.

7. A device according to any one of claims 1 to 5, characterized in that the time delay circuit (16; C2, A2) delivers a rising voltage edge to reduce the excitation current, and in that the negative feedback circuit (20) is a resistive circuit (R14).

8. A device according to any one of claims 1 to 6, characterized in that the negative feedback circuit (20) comprises a current source (G) and switching means (T5, T6) to apply the current from the source to the input of the circuit for obtaining the mean value selectively as a function of the output state of the time delay circuit (16).

9. A device according to claim 8, characterized in that the negative feedback circuit is connected directly to the output of the time delay circuit (16).

10. A device according to claim 8, characterized in that the negative feedback circuit is connected to the output of the power stage (18, T4).
